# EUROPÄISCHE PATENTSCHRIFT

(11) **EP 2 985 133 B1**
(45) Veröffentlichungstag und Bekanntmachung des Hinweises auf die Patenterteilung: **04.12.2019**
(21) Anmeldenummer: 15177340.5
(22) Anmeldetag: 17.07.2015
(51) Int. Cl.: B29C 63/44, F16L 43/00, B29L 23/00, B29D 23/00, B29C 65/66, B29K 105/02, B29C 65/00, B29C 65/10, B29C 65/20, B29C 65/42, B29C 63/42

(54) **VERFAHREN ZUR NACHUMHÜLLUNG EINES ROHRFORMTEILS**
METHOD FOR SUBSEQUENTLY CLADDING A PIPE PART
PROCÉDÉ D'ENROBAGE ULTÉRIEUR D'UNE PIÈCE TUBULAIRE

(30) Priorität: 11.08.2014 DE 102014111381
(43) Veröffentlichungstag der Anmeldung: 17.02.2016
(60) Teilanmeldung: 19161980.8
(73) Patentinhaber: egeplast international GmbH, 48268 Greven (DE)
(72) Erfinder: den Ouden, Dirk, 48282 Emsdetten (DE)
(74) Vertreter: Fritz, Edmund Lothar

(56) Entgegenhaltungen:
- EP-A1- 0 046 027
- DE-A1- 3 211 796
- DE-A1- 3 627 911
- DE-U1- 20 210 474
- FR-A1- 2 332 116
- US-A- 3 455 336

## Beschreibung

Die vorliegende Erfindung betrifft ein Verfahren zur Nachumhüllung von Rohrformteilen, bei dem man das Rohrformteil mittels einer Schrumpfmuffe umhüllt, die bei Anwendung von Wärme schrumpft.

Grundsätzlich ist die Verwendung von Schrumpfschläuchen zur Umhüllung von Rohren aus dem Stand der Technik seit längerem bekannt. Beispielsweise beschreibt die DE 14 79 648 wärmeschrumpfbare mehrschichtige Überzüge aus rückstellfähigen Polymeren. Dies sind Materialien, insbesondere verformte thermoplastische Kunststoffe, die ein Formgedächtnis haben und sich bei Anwendung von Wärme in ihre ursprüngliche Form zurückkehren. Dieses Phänomen wird in der Schrift als Thermorückfederung und ansonsten auch als "Memoryeffekt" bezeichnet. Diese Eigenschaft ermöglicht die Herstellung von Schrumpfmuffen, mittels derer man in einem aufgeweiteten Zustand einen Rohrabschnitt umhüllen und die Muffe anschließend durch Anwendung von Wärme auf den Rohrabschnitt aufschrumpfen kann.

In der DE 31 01 256 A1 ist eine längsgeteilte Kabelmuffe aus einem thermoplastischen Kunststoff mit einem Formgedächtnis beschrieben, die durch Wärmezufuhr auf einen abzudichtenden Gegenstand aufschrumpfbar ist. Um die Längsnaht zu schließen wird hier eine Art Klettverschluss mit Verschlusselementen entlang der Längsränder des Muffenrohrs verwendet. Ein solcher Verschluss der Längsnaht ist jedoch nicht dauerhaft stabil und ausreichend dicht wie beispielsweise eine stoffschlüssige Schweißverbindung. Zudem wird das Muffenrohr so gerollt, dass sich im Bereich der Längsnaht eine Überlappung ergibt, wodurch ein unrundes Rohr entsteht. Für ein im Erdreich zu verlegendes Rohr für Versorgungsleitungen wie Gas, Wasser, Abwasser etc. ist eine solche geometrische Form nicht normengerecht und daher nicht akzeptabel.

Aus der DE 10 2007 038 257 A1 ist die Verwendung von Schrumpfmuffen im Bereich von Abzweigungen von Stahlrohrleitungen mit Kunststoffisolierung bekannt, wobei dort Schrumpfmuffen im Verbindungsbereich zweier Rohrleitungsabschnitte über die zu verbindenden Rohrleitungsabschnitte geschoben und danach zunächst eine Verschweißung der Rohrleitungsenden und anschließend ein Aufschrumpfen der Schrumpfmuffe im Verbindungsbereich erfolgt. Die Schrumpfmuffe muss dabei zunächst in eine von der Verbindungsstelle entfernte Position geschoben werden, damit sie durch die beim Schweißvorgang auftretende Wärme nicht vorzeitig schrumpft. Bei dieser bekannten Technik können zwar auch Formteile jeweils untereinander oder mit geraden Rohrleitungsabschnitten verbunden werden, wie beispielsweise T-Stücke oder gekrümmte Rohrleitungsabschnitte, aber diese müssen jeweils endseitig gerade Rohrstutzen aufweisen und die verwendete Schrumpfmuffe ist ringförmig ausgebildet und wird über die zu verbindenden geraden Rohrstutzen im Verbindungsbereich geschoben.

In der DE 10 2010 015 462 A1 ist ein Verfahren zum Verbinden von ummantelten Rohren unter Verwendung von Schrumpfmuffen bekannt. Bei diesem Verfahren werden jedoch Rohre miteinander verbunden, deren Mantel eine innere Schaumstoffschicht aufweist. Daher ist das Verfahren auch spezifisch für derartige Rohre mit Schaumstoffschichten ausgelegt, wobei ein Ringraum zwischen den Mantelenden der zu verbindenden Rohre ausgeschäumt wird. Außerdem wird eine Gaspermeationssperrfolie um den ausgeschäumten Ringraum gewickelt, die seitlich mit Hilfe von Dicht/Klebebändern abgedichtet werden muss. Durch die Gaspermeationssperrfolie wird verhindert, dass Sauerstoff aus der Atmosphäre mit der Schaumstoffschicht in Kontakt tritt.

Mehrschichtige Rohre, insbesondere mehrschichtige Kunststoffrohre, beispielsweise bestehend aus Kernrohren mit Schutzmantel und gegebenenfalls weiteren Zwischenschichten zwischen Kernrohr und Schutzmantel lassen sich maschinell fertigen, insbesondere durch Rohrextrusion, sofern es sich um geradlinige Rohrleitungsabschnitte handelt. Bei Formteilen und Fittingen mit nicht geradlinigen Abschnitten, wie beispielsweise Bögen, T-Stücken, Reduzierungen für mehrschichtige Rohrleitungen, können jedoch die Kernrohrabschnitte nicht maschinell nachumhüllt werden. Daher erfolgt hier nach dem Stand der Technik das Nachumhüllen beispielsweise durch Klebebänder, mittels derer Kernrohrabschnitte der Formteile nachumhüllt werden, um einen Schutzmantel zu bilden, d.h. eine äußere Schicht für den mechanischen Schutz des Kernrohrabschnitt des Formteils. Noch komplexer sind die Anforderungen bei Formteilen, bei denen Zwischenschichten vorhanden sind, beispielsweise eine elektrische Zwischenschicht, die zur Überwachung einer Rohrleitung dient, denn diese Zwischenschichten müssen absolut wasserdicht ausgeführt werden.

Bei Formteilen der vorgenannten Art, beispielsweise Rohrbögen, ist es auch nicht möglich, herkömmliche Schrumpfschläuche für die Nachumhüllung zu verwenden, da sich ein Schrumpfschlauch auf der Innenseite des Rohrbogens des Formteils stauchen würde.

Die US 3 455 336 A beschreibt ein Verfahren zur Nachumhüllung von Formteilen, bei dem man das Rohrformteil mittels einer Schrumpfmuffe umhüllt, die bei Anwendung von Wärme schrumpft, wobei man ein unter Druck und Wärme geweitetes Kunststoffrohrmaterial zunächst in axiale Segmentelemente aufschneidet und diese Segmentelemente in dem herzustellenden Rohrformteil entsprechenden Winkeln zu einer Segmentschrumpfmuffe wieder zusammenfügt, die Segmentschrumpfmuffe um das nachzuumhüllende Rohrformteil legt und dann die Segmentschrumpfmuffe unter Einbringung von Wärme schrumpft.

Die DE 36 27 911 A1 beschreibt ein Band aus einem bei Wärmezufuhr schrumpfbaren vernetzten Kunststoff, welches nach Art einer Manschette um einen langgestreckten Gegenstand herumlegbar ist und nach dem Verbinden der Bandkanten durch Wärmezufuhr auf den Gegenstand schrumpfbar ist, wobei die Bandkantenbereiche aus nicht vernetztem Kunststoff bestehen und die Verbindung der Bandkanten durch Schmelzschweißen erfolgt. Aus dieser Schrift ist es weiterhin bekannt, ein Band aus zwei Einzelbändern durch Verschweißen der Längskanten herzustellen, wobei die Schweißnaht durch Spiegelschweißen mit einem elektrisch oder gasbeheizten Spiegel hergestellt wird.

Aus der DE 202 10 474 U1 ist es bekannt, die Verbindungsstelle eines aus einem Innenrohr und einem äußeren Kunststoffrohr bestehenden Leitungsrohres mit einem Rohrbogen aus Kunststoff zu umhüllen, wobei der Rohrbogen aus zwei miteinander verbindbaren Bogensegmenten besteht und eine Trennebene der Bogensegmente unter einem Winkel von 45° zu den Längsachsen der Bogensegmente verläuft. Dabei sind die der Trennebene abgekehrten Enden der Bogensegmente schrumpfbar, insbesondere wärmeschrumpfbar ausgebildet.

Aus der DE 32 11 796 A1 ist ein flexibler Gegenstand aus einem sich bei Wärmeeinwirkung erholbarem Material bekannt, der geeignet ist um ein rohrförmiges Objekt herum gewickelt zu werden. Der Gegenstand besitzt beabstandete sich in Längsrichtung erstreckende seitliche Kanten und wird so um das Rohr gewickelt, dass eine Überlappung entsteht. Durch Fäden oder Fasern in der Überlappungszone entsteht beim Zusammenpressen eine Verschlingung, also eine lösbare Befestigung und danach wird der Gegenstand durch Wärmeeinwirkung auf das Rohr aufgeschrumpft.

In der EP 0 046 027 A1 werden durch Einwirkung von Wärme schrumpfbare polymere Hohlkörper beschrieben, die so geformt sind, dass sie nicht direkt durch Extrusion hergestellt werden können, beispielsweise Tüllen. Hier geht man von einer Folie aus, die erwärmt wird, über eine Form gelegt und unter Anwendung von Vakuum tiefgezogen wird. Die so hergestellte Hälfte des Hohlkörpers wird mit einer zweiten komplementären Hälfte zu einem Hohlkörper verschweißt und danach mit Elektronenstrahlung bestrahlt, um das Kunststoffmaterial zu vernetzen.

In der FR 2 332 116 A1 werden durch Wärme schrumpfbare Objekte, beispielsweise in Form von Rohrbögen, beschrieben, bei denen ebenfalls zunächst zwei Hälften hergestellt werden, die entlang einer Längsnaht, in deren Bereich sie jeweils angeformte Profile aufweisen, miteinander verbunden werden. Für die Verbindung verwendet man ein U-förmiges Profil, welches die an den beiden Hälften angeformten Profile übergreift. Diese Objekte werden um einen Rohrbogen gelegt und mittels Wärme auf diesen aufgeschrumpft.

Die Aufgabe der Erfindung besteht darin, ein Verfahren zur Nachumhüllung eines Rohrformteils mit den Merkmalen der eingangs genannten Gattung zu schaffen, welches rationeller ist als bekannte Verfahren und zu mechanisch belastbaren und beständigen Rohrformteilen führt.

Die Lösung dieser Aufgabe liefert ein Verfahren zur Nachumhüllung eines Rohrformteils der eingangs genannten Gattung mit den Merkmalen des Hauptanspruchs.

Erfindungsgemäß ist vorgesehen, dass man ein unter Druck und Wärme geweitetes Kunststoffrohrmaterial zunächst in axiale Segmentelemente aufschneidet, diese Segmentelemente in dem herzustellenden Rohrformteil entsprechenden Winkeln zu einer Segmentschrumpfmuffe wieder zusammenfügt, die Segmentschrumpfmuffe in Längsrichtung auftrennt, um das nachzuumhüllende Rohrformteil legt, die Längsnaht verschließt und dann die Segmentschrumpfmuffe unter Einbringung von Wärme schrumpft.

Gemäß einer bevorzugten Weiterbildung der vorliegenden Erfindung wird die Längsnaht der um das Kernrohr des Formteils gelegten Segmentschrumpfmuffe verschweißt, beispielsweise mittels eines Handschweißextruders.

Das Erwärmen der Segmentschrumpfmuffe, um diese auf das Kernrohr des Formteils aufzuschrumpfen, kann zum Beispiel mittels einer Gasflamme oder mittels Heißluft erfolgen.

Die Segmente zur Herstellung der Segmentschrumpfmuffe können beispielsweise durch Stumpfschweißen in den für das herzustellende Formteil entsprechenden Winkeln zueinander miteinander verbunden werden. Vor diesem Schweißvorgang ist es vorteilhaft, die Segmentelemente in ihrer vorgesehenen Winkelposition zueinander mechanisch zu fixieren, beispielsweise mit Hilfe von Manschetten oder dergleichen. Man kann die Segmentelemente zum Beispiel auch durch heften aneinander fixieren.

Ein erfindungsgemäßes Rohrformteil kann beispielsweise ein T-Stück, ein Reduzierstück oder ein Rohrbogen sein. Wenn man eine Segmentschrumpfmuffe für einen Rohrbogen von beispielsweise insgesamt 90° aus mehreren Segmentelementen aufbaut, dann kann man zum Beispiel dazu ein erstes gerades Segmentelement verwenden, das an seinem einen äußeren Ende in Querrichtung geradlinig abgeschnitten ist, aber an seinem anderen (inneren) Ende schräg angeschnitten ist, beispielsweise in einem Winkel von etwa 22,5° zu seiner Querebene. Daran kann sich dann ein Segmentelement anschließen, das an seinen beiden Enden schräg angeschnitten ist, beispielsweise in einem Winkel von jeweils etwa 22,5° zur Querebene und das außenseitig bezogen auf den herzustellenden Rohrbogen um etwa 30° abgewinkelt ist zur Längsachse des ersten geraden Segmentelements. Daran kann sich dann ein drittes winkelförmiges Segmentelement anschließen, welches ebenso geformt ist wie das zweite Segmentelement, so dass das zweite und dritte Segmentelement jeweils in der Seitenansicht gesehen eine Trapezform haben und daran kann sich dann wiederum ein viertes gerades Segmentelement anschließen, das an seinem Ende, welches dem Rohrbogen zugewandt ist schräg angeschnitten ist, aber an seinem anderen äußeren Ende in Querrichtung geradlinig abgeschnitten ist und somit eine entsprechende Grundform hat wie das erste Segmentelement. Da zwischen dem ersten und dem zweiten Segmentelement außenseitig bezogen auf den Rohrbogen in einem Winkel von etwa 30° abgewinkelt wird, dann zwischen dem zweiten und dem dritten Segmentelement wiederum in einem Winkel von etwa 30° abgewinkelt wird und desgleichen zwischen dem dritten Segmentelement und dem vierten Segmentelement ebenfalls um etwa 30° abgewinkelt wird, ergibt sich insgesamt ein Rohrbogen von 90°. Ein entsprechendes Beispiel eines solchen Rohrbogens wird nachfolgend noch in der Figurenbeschreibung unter Bezugnahme auf die Zeichnungen näher und anschaulicher erläutert.

Gemäß einer bevorzugten Weiterbildung der Erfindung können die Segmentelemente für die Herstellung der Segmentschrumpfmuffe beispielsweise aus einem vergleichsweise dünnwandigen Polyolefinmaterial, insbesondere aus einem Polyethylenmaterial bestehen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 ein Kernrohr eines Rohrformteils, welches nach dem erfindungsgemäßen Verfahren nachträglich umhüllt wird;

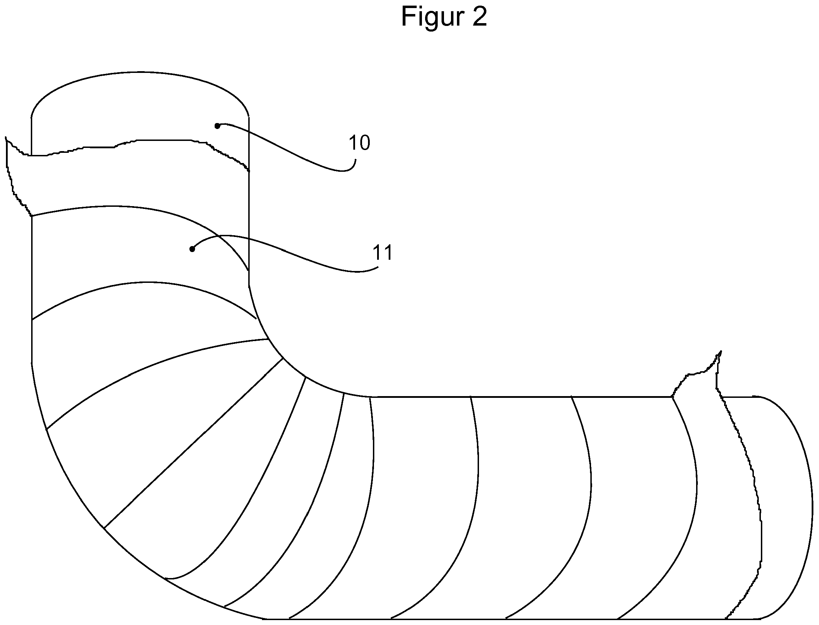

Figur 2 das Kernrohr des Rohrformteils von Figur 1, welches vor der Umhüllung mit einer Schrumpfmuffe zunächst mit einer metallischen Folie umwickelt wurde;
Figur 3 eine aus mehreren Rohrsegmenten hergestellte Segmentschrumpfmuffe in Form eines 90° Bogens, mittels derer das in Figur 2 dargestellte Kernrohr umhüllt wird;
Figur 4 die in Längsrichtung aufgetrennte Segmentschrumpfmuffe von Figur 3, die um das in den Figuren 1 und 2 gezeigte Kernrohr gelegt wurde;
Figur 5 die Segmentschrumpfmuffe von Figur 4, nachdem sie für den nachfolgenden Schweißvorgang geheftet und fixiert wurde;
Figur 6 die Segmentschrumpfmuffe von Figur 5 während des Schweißvorgangs zum Verschließen der Längsnaht;
Figur 7 das fertige Rohrformteil nach dem Schrumpfvorgang;
Figur 8 einen Querschnitt durch das fertige Rohrformteil von Figur 7.

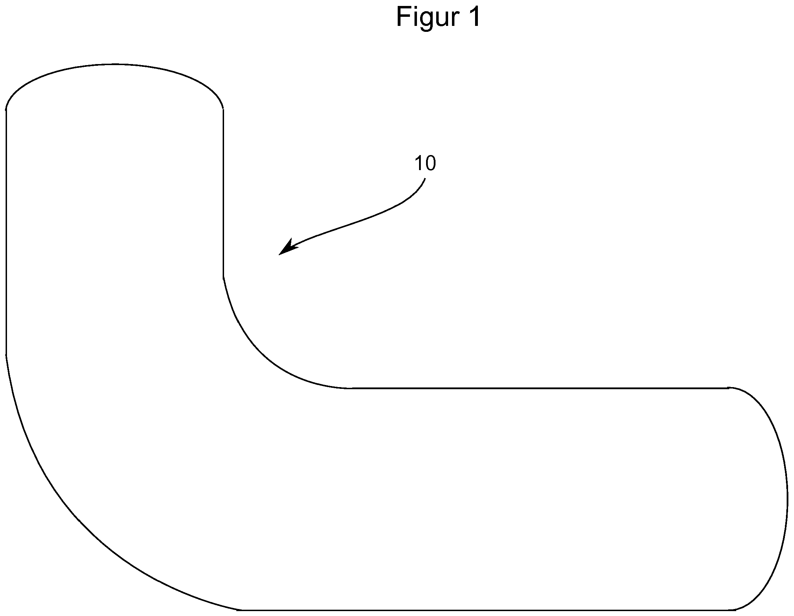

Zunächst wird auf Figur 1 Bezug genommen. Die Darstellung zeigt ein Kernrohr 10 eines Rohrformteils, von dem ausgegangen wird und welches nach dem erfindungsgemäßen Verfahren nachträglich umhüllt wird. Es handelt sich bei diesem Kernrohr um einen Rohrbogen von beispielsweise 90°. Auf dieses Kernrohr, welches aus einem für den Transport flüssiger oder gasförmiger Medien geeigneten Innenrohr besteht, wird zunächst vor der Aufbringung der abschließenden Umhüllung eine Zwischenschicht 11 aus einer metallischen Folie gewickelt. Hierbei handelt es sich um eine elektrisch leitende Zwischenschicht, die bei der verlegten Rohrleitung beispielsweise dazu dient, Leckagen in der Rohrleitung zu überwachen. Aus diesem Grunde muss die durch Nachumhüllen danach aufzubringende äußere Schutzschicht absolut wasserdicht sein, da sonst ein Leck angezeigt und somit die gewünschte Überwachung nicht funktionieren würde.

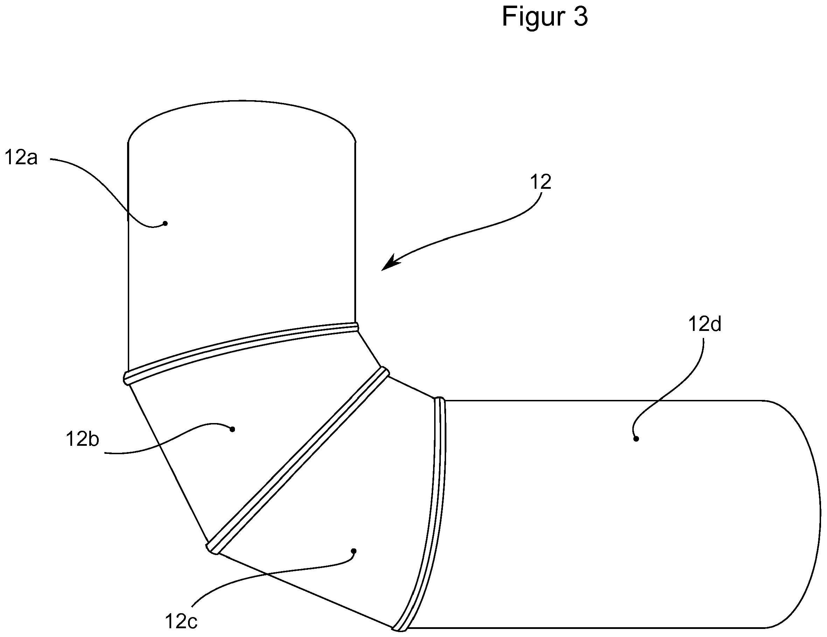

In Figur 3 ist nun die Segmentschrumpfmuffe 12 dargestellt, die wie man sieht aus insgesamt vier miteinander verschweißten Segmentelementen hergestellt wurde, um so einen 90 ° Bogen zu erhalten, der sich auf das Kernrohr 10 aufschrumpfen lässt. Natürlich sind zahlreiche andere Möglichkeiten denkbar, um einen solchen 90°-Bogen aus mehreren Segmentelementen zusammen zu setzen. Im vorliegenden Fall wurden zwei jeweils endseitige weitgehend geradlinige Segmentelemente 12 a und 12 d verwendet, die an ihrem jeweils äußeren Ende jeweils gerade in Querrichtung abgeschnitten sind, jedoch an ihrem jeweils inneren Ende, der dem Bogen zugewandt ist, jeweils schräg angeschnitten sind. Hinzu kommen zwei jeweils kürzere in der Ansicht gemäß Figur 3 etwa trapezförmige Segmentelemente 12 b und 12 c, die jeweils an das innere Ende der beiden geradlinigen Segmentelemente 12 a bzw. 12 d angesetzt sind, wobei die beiden kürzeren Segmentelemente 12 b und 12 c im Wesentlichen den Bogenabschnitt der bogenförmigen Segmentschrumpfmuffe bilden. Betrachtet man die Außenseite des Bogenabschnitts, dann bildet der Außenradius des ersten trapezförmigen Segmentelements 12 b einen Winkel von etwa 30 ° mit dem geradlinigen Segmentelement 12 a. Das zweite trapezförmige Segmentelement 12 c bildet mit seinem Außenradius wiederum einen Winkel von etwa 30 ° mit dem ersten trapezförmigen Segmentelement 12 b. Letzteres bildet wiederum mit dem zweiten geradlinigen Segmentelement 12 d im Außenradius des Bogens einen Winkel von etwa 90 °, so dass sich in der Summe insgesamt ein 90 ° Bogen ergibt. Entsprechend setzen sich die Winkel im Bereich des Innenradius des Bogenabschnitts zusammen.

Betrachtet man hingegen die Querrichtung, dann bildet die gemeinsame Schweißkante des ersten geradlinigen Segmentelements 12 a und des ersten trapezförmigen Segmentelements 12 b einen Winkel von etwa 22,5 ° bezogen auf die Querebene bzw. das geradlinig abgeschnittene äußere Ende des ersten geradlinigen Segmentelements 12 a. Da das erste trapezförmige Segmentelement 12 b und das zweite trapezförmige Segmentelement 12 c jeweils an ihren beiden Enden in Querrichtung in einem Winkel von 22,5 ° angeschnitten sind und beide geradlinigen Segmentelemente 12 a und 12 d jeweils an ihren inneren dem Bogen zugewandten Enden ebenfalls jeweils um 22,5 ° angeschnitten sind, addieren sich diese vier Winkel ebenfalls zu 90 °, daher nehmen die beiden geradlinigen Abschnitte 12 a und 12 d einen Winkel von insgesamt 90 ° miteinander ein. Zwischen den beiden geradlinigen Segmentelementen 12 a und 12 d liegen die beiden trapezförmigen Segmentelemente 12 b und 12 c. Man sieht, dass auf diese Weise eine Segmentschrumpfmuffe gebildet wird, die sowohl im Bereich des Außenradius des Bogens als auch im Bereich des Innenradius des Bogens keinen durchgehend einheitlich gekrümmten Bogen bildet, sondern einen Bogen, der sich aus den jeweils in sich geradlinigen Segmentabschnitten der vier Segmentelemente 12 a, 12 b, 12 c, 12 d zusammensetzt. Eine solche aus Segmentelementen zusammengeschweißte Segmentschrumpfmuffe lässt sich auf ein bogenförmiges Kernrohr 10 aufschrumpfen, während dies bei einer Schrumpfmuffe mit durchgehendem Bogen (Krümmungsradius) nicht möglich ist.

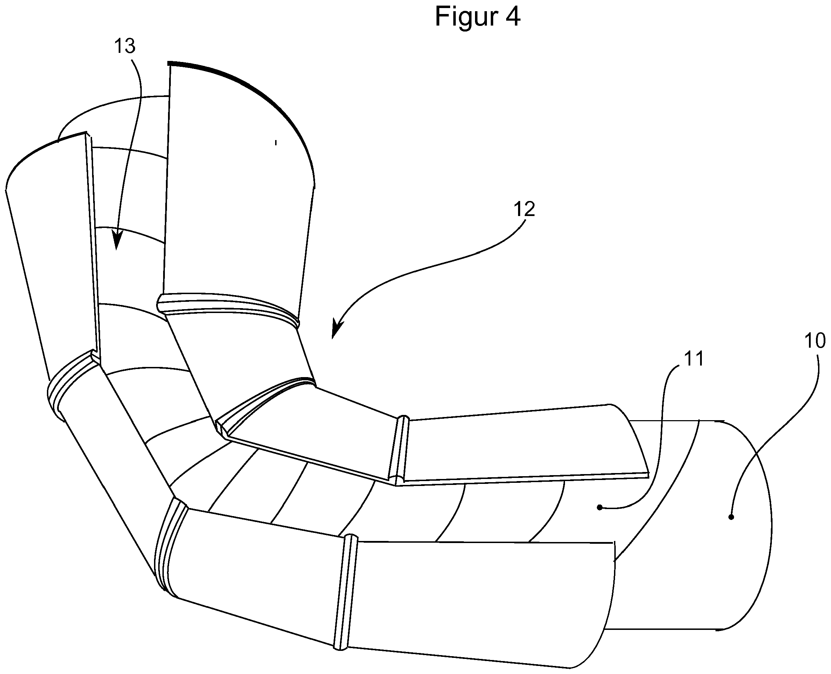

Die gemäß den obigen Erläuterungen hergestellte Segmentschrumpfmuffe 12 wird nun in Längsrichtung der Länge nach aufgeschnitten und kann dann um das Kernrohr 10 des Rohrformteils gelegt werden, so wie dies in Figur 4 dargestellt ist. Nach dem Aufschneiden in Längsrichtung ist die Segmentschrumpfmuffe so flexibel, dass sie aufgeklappt werden kann. In Längsrichtung, der Bogenform folgend, verbleibt ein Längsschlitz 13, der nach dem Umlegen zunächst etwas breiter ist, wie man in Figur 4 erkennt, da die Segmentschrumpfmuffe 12die Tendenz hat, sich leicht aufzubiegen. Deshalb muss die Segmentschrumpfmuffe, bevor der Längsschlitz 13 durch einen Schweißvorgang wieder verschlossen werden kann, zunächst geheftet und fixiert werden.

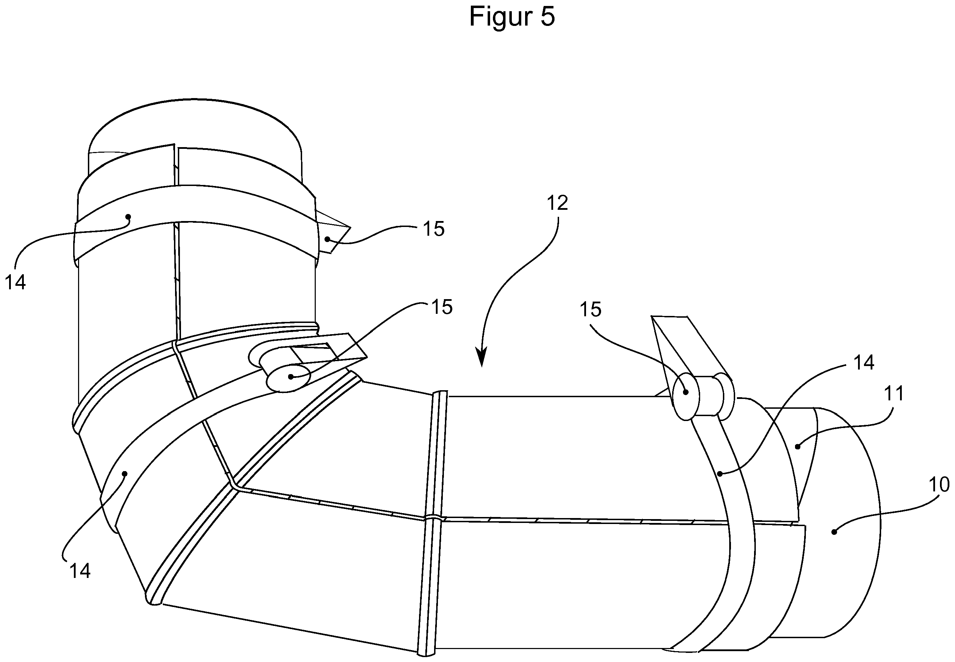

Dieser Zustand ist in der Figur 5 dargestellt. Man erkennt, dass mit Hilfe von Gurten 14 und Spannvorrichtungen 15 die Segmentschrumpfmuffe 12 auf dem mit der Zwischenschicht 11 umwickelten Kernrohr 10 so fixiert ist, dass der Längsschlitz 13 nur noch vergleichsweise schmal ist. Es kann nun ein Schweißvorgang beispielsweise mittels eines Handschweißextruders 16 stattfinden, um den Längsschlitz mit einem thermoplastischen Kunststoff zu verschließen

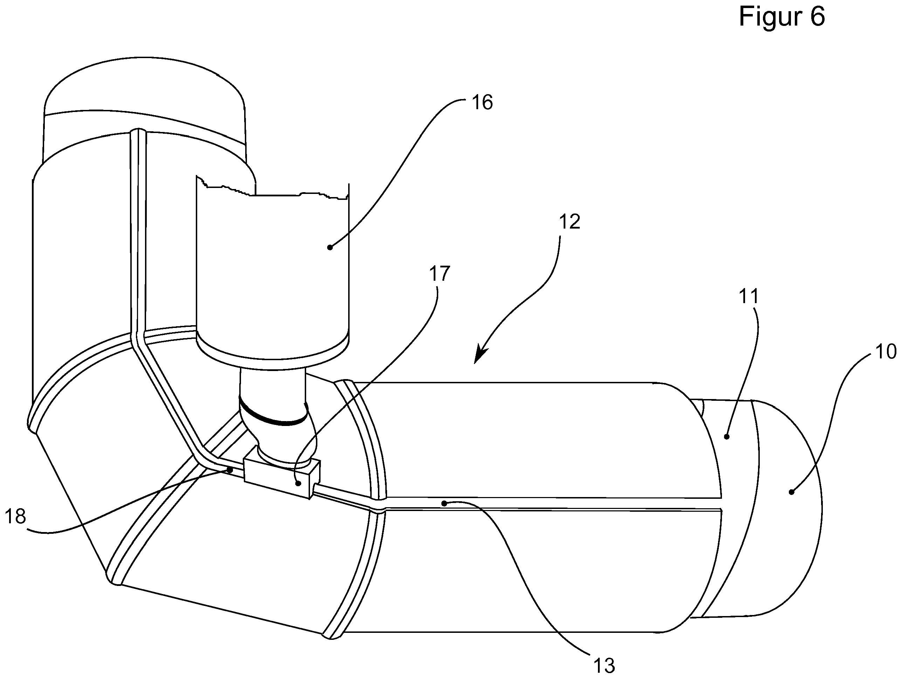

Dieser Schweißvorgang ist in Figur 6 dargestellt. Man sieht einen vorderen Teilbereich eines Handschweißextruders 16 mit einem Schweißschuh 17 am vorderen Ende, aus dem ein Strang 18 eines aufgeschmolzenen Kunststoffs austritt, der den Längsschlitz 13 verschließt und nach dem Erkalten eine Schweißnaht bildet. Der Handschweißextruder 16 wird dabei von einer Bedienungsperson so geführt, dass sich der Schweißschuh 17 oberhalb des Längsschlitzes 13 und an diesem entlang bewegt, so dass der Strang des aufgeschmolzenen Kunststoffs entlang des Längsschlitzes abgelegt wird.

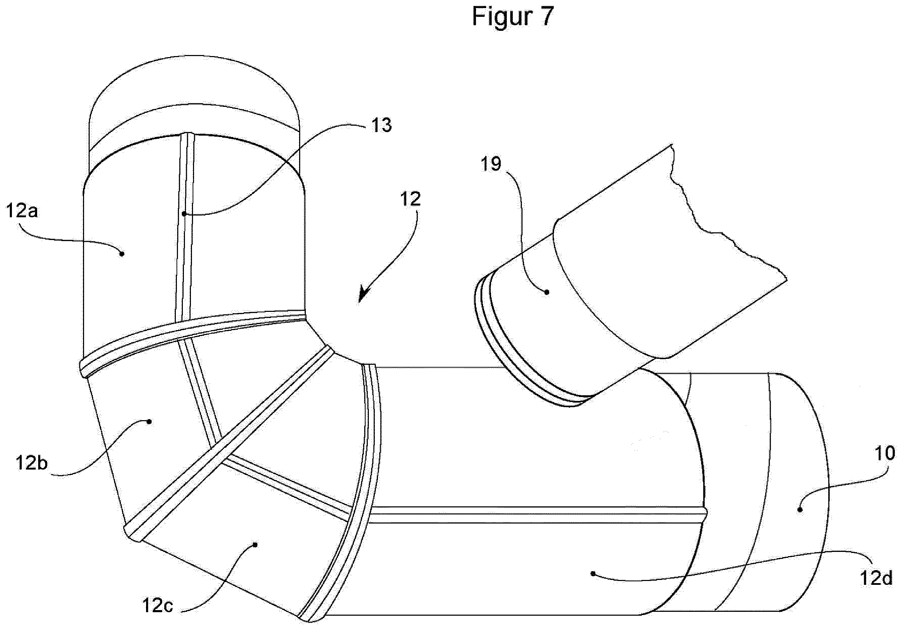

Nach dem Erkalten der Schweißnaht umschließt die Segmentschrumpfmuffe 12 das Kernrohr 10 und die Zwischenschicht 11 in dem Bereich des Rohrbogens vollständig mit noch etwas Umfangsabstand. Die Segmentschrumpfmuffe 12 kann nun durch Aufbringen von Wärme beispielsweise mittels eines Heißluftgebläses 19 auf den Rohrbogen des Kernrohrs 10 aufgeschrumpft werden. Bei dieser Erwärmung kehrt das Material der Segmentschrumpfmuffe 12 aufgrund des Memoryeffekts (Formgedächtnis) in eine frühere Form zurück, wobei es sich zusammenzieht (schrumpft). Dieser endgültige Zustand des Rohrformteils nach Aufschrumpfen der Segmentschrumpfmuffe 12 ist in Figur 7 dargestellt.

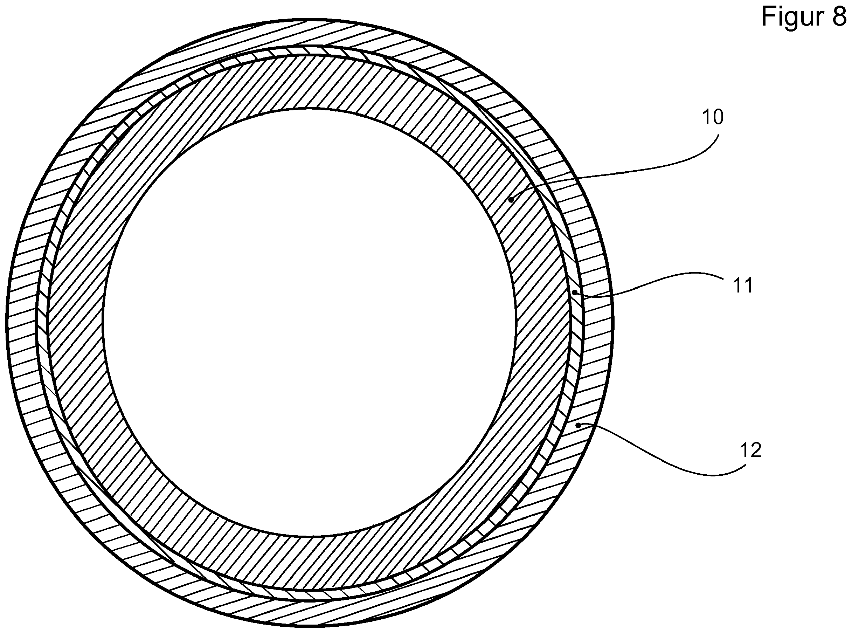

Figur 8 zeigt einen Querschnitt durch die fertige Segmentschrumpfmuffe 12 von Figur 7. Man erkennt hier das Kernrohr 10, welches die Innenschicht des Rohrformteils bildet, die auf das Kernrohr 10 aufgebrachte Zwischenschicht 11, sowie die aufgeschrumpfte Segmentschrumpfmuffe 12, die nur Kernrohr 10 und Zwischenschicht dicht umschließt. Weiterhin ist die Schweißnaht 18 erkennbar, die nach dem Schweißvorgang den durch das Aufschneiden entstandenen Längsschlitz der Segmentschrumpfmuffe dicht verschließt.

### Bezugszeichenliste

- 10: Kernrohr
- 11: Zwischenschicht
- 12: Segmentschrumpfmuffe
- 12 a: Segmentelement, geradlinig
- 12 b: Segmentelement, trapezförmig
- 12 c: Segmentelement, trapezförmig
- 12 d: Segmentelement, geradlinig
- 13: Längsschlitz
- 14: Gurte
- 15: Spannvorrichtungen
- 16: Handschweißextruder
- 17: Schweißschuh
- 18: Strang von aufgeschmolzenem Kunststoff, Schweißnaht
- 19: Heißluftgebläse

## Patentansprüche

1. Verfahren zur Nachumhüllung von Rohrformteilen, bei dem man das Rohrformteil mittels einer Schrumpfmuffe umhüllt, die bei Anwendung von Wärme schrumpft, wobei man ein unter Druck und Wärme geweitetes Kunststoffrohrmaterial zunächst in axiale Segmentelemente aufschneidet, diese Segmentelemente (12 a, 12 b, 12 c, 12 d) in dem herzustellenden Rohrformteil entsprechenden Winkeln zu einer Segmentschrumpfmuffe (12) wieder zusammenfügt, die Segmentschrumpfmuffe in Längsrichtung auftrennt, um das nachzuumhüllende Rohrformteil (10) legt, die Längsnaht (13) verschließt und dann die Segmentschrumpfmuffe (12) unter Einbringung von Wärme schrumpft.

2. Verfahren zur Nachumhüllung von Rohrformteilen nach Anspruch 1, **dadurch gekennzeichnet, dass** die Längsnaht (13) der Segmentschrumpfmuffe (12) verschweißt wird.

3. Verfahren zur Nachumhüllung von Rohrformteilen nach Anspruch 1, **dadurch gekennzeichnet, dass** die Segmentschrumpfmuffe (12) mittels einer Gasflamme oder mittels Heißluft erwärmt und geschrumpft wird.

4. Verfahren zur Nachumhüllung von Rohrformteilen nach Anspruch 2 oder 3, **dadurch gekennzeichnet, dass** die Segmentelemente (12 a, 12 b, 12 c, 12 d) durch Stumpfschweißen in den für das herzustellende Formteil entsprechenden Winkeln zueinander miteinander verbunden werden.

5. Verfahren zur Nachumhüllung von Rohrformteilen nach einem der Ansprüche 2 bis 4, **dadurch gekennzeichnet, dass** die Segmentelemente (12 a, 12 b, 12 c, 12 d), bevor sie zu der Segmentschrumpfmuffe (12) miteinander verbunden werden in ihrer vorgesehenen Winkelposition zueinander mechanisch fixiert werden.

6. Verfahren zur Nachumhüllung von Rohrformteilen nach einem der Ansprüche 1 bis 5, **dadurch gekennzeichnet, dass** das Rohrformteil ein Rohrbogen ist, insbesondere ein Rohrbogen mit einem Winkel im Bereich von etwa 45° bis etwa 90°.

## Claims

1. A method for subsequently cladding pipe fittings, in which the pipe fitting is clad by means of a shrink-on sleeve which shrinks when heat is applied, wherein a plastic pipe material expanded under pressure and heat is first cut into axial segment elements, these segment elements (12a, 12b, 12c 12d) are then fitted together again at the angles corresponding to the pipe fitting to be produced so as to form a segmented shrink-on sleeve (12), the segmented shrink-on sleeve is separated in the longitudinal direction, is placed around the pipe fitting (10) to be subsequently clad, the longitudinal seam (13) is closed and the segmented shrink-on sleeve (12) is then shrunk by applying heat.

2. The method for subsequently cladding pipe fittings according to claim 1, **characterized in that** the longitudinal seam (13) of the segmented shrink-on sleeve (12) is welded.

3. The method for subsequently cladding pipe fittings according to claim 1, **characterized in that** the segmented shrink-on sleeve (12) is heated and shrunk by means of a gas flame or by means of hot air.

4. The method for subsequently cladding pipe fittings according to claim 2 or 3, **characterized in that** the segment elements (12a, 12b, 12c, 12d) are connected to one another by butt welding at the angles corresponding to the fitting to be produced.

5. The method for subsequently cladding pipe fittings according to any one of claims 2 to 4, **characterized in that** the segment elements (12a, 12b, 12c, 12d) are mechanically fixed in their intended angular position relative to one another before they are connected to one another to form the segmented shrink-on sleeve (12).

6. The method for subsequently cladding pipe fittings according to any one of claims 1 to 5, **characterized in that** the pipe fitting is a pipe bend, in particular a pipe bend with an angle in the range from about 45° to about 90°.

## Revendications

1. Procédé pour le gainage ultérieur de pièces moulées tubulaires, dans lequel on entoure la pièce moulée tubulaire au moyen d'un manchon rétractable qui rétrécit par application de chaleur, dans lequel on découpe d'abord un matériau tubulaire en plastique élargi par pression et chaleur en éléments de segments axiaux, on joint à nouveau ces éléments de segments (12a, 12b, 12c, 12d) axiaux dans des angles correspondants à la pièce moulée tubulaire à fabriquer en un manchon rétractable à segments (12), on sépare le manchon rétractable à segments dans le sens longitudinal, on le place autour de la pièce moulée tubulaire (10) à gainer ultérieurement, on ferme la jointure longitudinale (13) et enfin on rétracte le manchon rétractable à segments (12) par apport de chaleur.

2. Procédé pour le gainage ultérieur de pièces moulées tubulaires selon la revendication 1, **caractérisé en ce que** la jointure longitudinale (13) du manchon rétractable à segments (12) est soudée.

3. Procédé pour le gainage ultérieur de pièces moulées tubulaires selon la revendication 1, **caractérisé en ce que** le manchon rétractable à segments (12) est chauffé et rétracté par une flamme au gaz ou par de l'air chaud.

4. Procédé pour le gainage ultérieur de pièces moulées tubulaires selon la revendication 2 ou 3, **caractérisé en ce que** les éléments de segments (12a, 12b, 12c, 12d) sont reliés entre eux par soudage bout à bout dans les angles correspondant à la pièce moulée à fabriquer.

5. Procédé pour le gainage ultérieur de pièces moulées tubulaires selon l'une des revendications 2 à 4, **caractérisé en ce que** les éléments de segments (12a, 12b, 12c, 12d), avant qu'ils ne soient reliés entre eux en le manchon rétractable à segments (12), sont fixés mécaniquement entre eux dans leur position angulaire prévue.

6. Procédé pour le gainage ultérieur de pièces moulées tubulaires selon l'une des revendications 1 à 5, **caractérisé en ce que** la pièce moulée tubulaire est un raccord coudé, en particulier un raccord coudé avec un angle situé dans la plage d'environ 45° à environ 90°.
